# EUROPÄISCHE PATENTSCHRIFT

(11) **EP 1 628 453 B1**
(45) Veröffentlichungstag und Bekanntmachung des Hinweises auf die Patenterteilung: **02.03.2011**
(21) Anmeldenummer: 04019860.8
(22) Anmeldetag: 20.08.2004
(51) Int. Cl.: H04L 29/06, H04L 12/24

(54) **Verfahren und Vorrichtung zur Verwaltung von Objekten eines Kommunikationsnetzes**
Method and apparatus for management of objects of a communications network
Méthode et dispositif pour la gestion des objets d'un réseau de communication

(43) Veröffentlichungstag der Anmeldung: 22.02.2006
(73) Patentinhaber: Nokia Siemens Networks GmbH & Co. KG, 81541 München (DE)
(72) Erfinder: Frantz, Michael, 81737 München (DE)

(56) Entgegenhaltungen:
- WO-A-00/00879
- US-B1- 6 236 996
- YU C-F: "Access control and authorization plan for customer control of network services" IEEE JOURNAL 1989, 27. November 1989 (1989-11-27), Seiten 862-869, XP010083589
- KARJOTH G ED - CLARKE A ET AL CLARKE A ET AL: "INTEGRATED ACCESS CONTROL MANAGEMENT" BRINGING TELECOMMUNICATION SERVICES TO THE PEOPLE - ISS & N 1995. THIRD INTERNATIONAL CONFERENCE ON INTELLIGENCE IN BROADBAND SERVICES AND NETWORKS, HERAKLION, CRETE, OCT. 16 - 19, 1995. PROCEEDINGS, PROCEEDINGS OF THE INTERNATIONAL CONFERENCE ON INT, Bd. CONF. 3, 16. Oktober 1995 (1995-10-16), Seiten 64-74, XP000593469 ISBN: 3-540-60479-0

## Beschreibung

Die Erfindung bezieht sich auf das Management von Netzwerken, z.B. von Kommunikationsnetzwerken, und betrifft insbesondere die Vergabe von Zugriffsrechten für einen User oder eine Gruppe von Usern für bestimmte Objekte des Netzwerkes.

Bei einem Kommunikationsnetzwerk müssen eine Vielzahl von Elementen, physikalischen und/oder logischen Ressourcen, Diensten u.ä. verwaltet werden. Insbesondere ist es notwendig, zu definieren, welche User oder Userklassen auf welche Ressourcen und/oder Objekte zugreifen können, und von welcher Art dieser Zugriff sein darf.

Im Rahmen einer TMN-basierten Terminologie (TMN, Telecommunications Management Network), kann jedes Netzwerk in ein Netzmodell abgebildet werden, das mehrere hierarchische Schichten (auch Layers oder - im physikalischen Sinn - Tiers genannt) umfasst, wobei die Elemente der jeweiligen Schichten über definierte Schnittstellen (z.B. Q3) mit den jeweiligen Elementen der hierarchisch darüber liegenden Schicht kommunizieren.

Jedes Netzwerk besteht aus einer Vielzahl von Netzelementen und aus einer Vielzahl von Objekten (auch managed objects genannt). Die Objekte umfassen alle logischen und physikalischen Ressourcen des Netzwerkes. In einem Netzelement werden ein oder mehrere Objekte verwaltet. Dabei können auch Objekte unterschiedlicher Technologien (z.B. unterschiedliche Übertragungsmedien, wie die optische Datenübertragung, Telefonie, unterschiedliche Netztechnologien, wie ATM, GSM oder SDH) ein und demselben Netzelement zugeordnet sein. Netzelemente können unterschiedlich komplex sein und umfassen insbesondere Ports, Termination Points oder Performance Management Points, Protection Groups etc.

Im Rahmen eines Managementsystems für Netzwerke vorstehend beschriebener Art ist es notwendig, einem Anwender, der auf das Netz oder auf eine Applikation des Netzes zugreift, bestimmte Zugriffsrechte auf die Elemente des Netzes und/oder Zugriffsrechte für ausführbare Aktionen innerhalb des Netzwerkes zuzuordnen. Des Weiteren müssen die Objekte verwaltet werden.

Bisher erfolgten die Verwaltung der Objekte und die Definition von Zugriffsrechten in der Regel auf der Hierarchieebene der Netzelemente. Aufgrund der voranschreitenden Einbindung und Unterstützung neuer Technologien in die Netzwerke und der Zunahme der Komplexität der Netzwerke als solches ist es erforderlich, dass ein Netzelement auch unterschiedliche Technologien unterstützen kann. Damit ist die Zuordnung von Zugriffsrechten auf der Ebene des Netzelementes nicht mehr ausreichend. Da auch Objekte unterschiedlicher Art in einem Netzelement gesteuert werden, wird es notwendig, die Zuordnung der Zugriffsrechte weiter zu differenzieren, so dass bei der Vergabe der Zugriffsrechte auch die zugrundeliegende Technologie der Objekte in einem Netzelement berücksichtigt werden kann. Mit der bekannten Zuordnung nach den Verfahren nach dem Stand der Technik war eine solche Differenzierung nicht möglich.

So offenbaren z.B. die Publikation US6236996 und WO00/00879 Verfahren, bei denen die Definition von Zugriffsrechten auf Netzwerkobjekte in hierarchischer Form vorgenommen werden kann, wobei mit einer Definition auch die Zugriffsrechte für Objekte der darunterliegenden Hierarchieebenen definiert werden können.

Die Erfindung hat sich deshalb zur Aufgabe gestellt, einen Weg aufzuzeigen, mit dem die Verwaltung der Objekte und die Vergabe von Zugriffsrechte für Objekte eines Kommunikationsnetzes auch für Objekte unterschiedlicher Technologie automatisiert und vereinfacht werden können.

Die Aufgabe wird durch die Merkmale der beiliegenden, neben geordneten Ansprüche gelöst und insbesondere durch ein Verfahren, eine Vorrichtung und ein System zur Verwaltung von Objekten, insbesondere zur Definition von Zugriffsrechten für eine Klasse oder Gruppe von Usern bzw. Anwendern auf zumindest ein Objekt, das zumindest einem Netzelement in einem Netzwerk zugeordnet ist, wobei das Netzelement verschiedene Technologien unterstützen kann und wobei die Verwaltung der Objekte im allgemeinen und die Vergabe der Zugriffsrechte im Besonderen auf einer über einer Hierarchieebene der Netzelemente befindlichen Hierarchieebene des Netzwerkes, insbesondere der Transmission Layer, erfolgt.

Bislang erfolgte insbesondere die Zuweisung von Zugriffsrechten nach den bekannten Verfahren direkt für jedes Netzelement. Mit der erfindungsgemäßen Lösung ist es möglich, eine Verfeinerung bei der Zuweisung vorzunehmen und die Zugriffsrechte auch für Objekte eines oder mehrerer Netzelemente(s) teilweise auch separat zu definieren. Damit kann auch eine Granularität Berücksichtigung finden, die unter der eines Netzelementes liegt. Dies war bislang nicht möglich.

Das hauptsächliche Anwendungsgebiet des erfindungsgemäßen Verfahrens liegt im Bereich der Kommunikationsnetzwerke. Die Definition der Zugriffsrechte erfolgt, indem ein Zustand oder ein Wert eines Attributes der Hierarchieebene 'Transmission Layer' für Objekte eines Übertragungsnetzes verwendet wird. Die Erfindung ist jedoch nicht auf dieses Anwendungsgebiet beschränkt und kann auch für ähnlich strukturierte, hierarchisch modellierbare Rechnernetze angewendet werden.

Die erfindungsgemäße Lösung unterstützt die Definition der Zugriffsrechte für Operatorgruppen. Häufig können bestimmte Kreise, Gruppen oder Klassen von Benutzern bzw. Usern definiert werden, für die ähnliche oder identische Zugriffsrechte gelten sollen. Bei Telekommunikationsnetzen ist es z.B. der Fall, dass einer Gruppe von Anwendern, die für die Verwendung eines bestimmten Leistungsmerkmals oder Features eine Gebühr bezahlen, auch ein Zugriff auf bestimmte Applikationen möglich sein soll. Nach welchen Kriterien die User einer Userklasse zugeordnet werden ist erfindungsgemäß einstellbar. Vorzugsweise wird die Definition der Zugriffsrechte wahlweise in Abhängigkeit von Technologiegruppen ausgeführt, indem die Transmission Layer nach unterschiedlichen Technologiegruppen gruppiert wird, denen die einzelnen Objekte zugeordnet sein können. Zugriffsrechte können dann für Gruppen von Objekten vergeben werden. Damit entsteht der Vorteil, dass die Anzahl der notwendigen Definitionen deutlich reduziert werden kann.

Es ist jedoch kumulativ (in bestimmten Fällen) oder alternativ auch möglich, dass die Zugriffsrechte nicht für eine serklasse, sondern für einzelnen User vergeben werden. Dies ist z.B. bei relativ kleinen Netzen sinnvoll. Üblicherweise umfasst die Userklasse jedoch eine Vielzahl von Usern.

Die erfindungsgemäße Lösung bezieht sich auf die Definition von Zugriffsrechten. Der Begriff der 'Definition' soll hier allgemein verstanden werden, als dass alle Aktionen im Zusammenhang mit Zugriffsrechten umfasst sind, insbesondere die Vergabe, Steuerung bzw. Überwachung und/oder die Verwaltung der Zugriffsrechte.

In der bevorzugten Ausführungsform der Erfindung erfolgt die Definition der Zugriffsrechte automatisch. Es ist voreinstellbar, welche Zugriffsrechte für welchen Zustand oder Wert des Attributes 'Transmission Layer' gelten sollen. Wird nun ein neues Objekt dem Netzwerk hinzugefügt, dann müssen die Rechte für dieses Objekt nicht mehr (sozusagen manuell) definiert werden, sondern die Zuordnung kann automatisch über den Wert des Attributes ermittelt werden. Damit erhöht sich zum einen der Komfort des Systems und zum anderen können Fehlerquellen durch fehlerhafte Zuordnung der Zugriffsrechte vermieden werden.

Ändern sich die Konfiguration und/oder Einstellungen des Netzwerkes, z.B. durch Änderungen an Objekten und/oder an Netzelementen, dann erfolgt erfindungsgemäß die Definition der Zugriffsrechte dynamisch, indem automatisch der Wert eines zugeordneten Attributes ausgewertet wird. Damit kann die Flexibilität des Systems gesteigert werden.

In einer bevorzugten Weiterbildung der Erfindung kann das Netzelement oder können die Netzelemente von unterschiedlichen End-to-End-Applikationen bedient werden.

Die Erfindung bezieht sich im Allgemeinen auf die Vereinfachung aller Aktionen, die in Zusammenhang mit den Objekten stehen, und betrifft insbesondere die Verwaltung der Objekte, die Definition, Vergabe und/oder Verwaltung von Zugriffsrechten auf die Objekte. Somit sind von dem erfindungsgemäßen Verfahren alle Managementaufgaben umfasst, die mit notwendigen Aktionen in Zusammenhang mit den Objekten und insbesondere deren Zugriffsrechten entstehen und getätigt werden müssen.

Die erfindungsgemäße Verarbeitung in Bezug auf die Objekte auf einer hierarchisch höher liegenden Ebene bringt den Vorteil, dass die vielen Einzelverarbeitungen pro Objekt nicht mehr notwendig sind, sondern jetzt durch

Die vorstehend beschriebenen, erfindungsgemäßen Ausführungsformen des Verfahren können auch als Computerprogrammprodukt ausgebildet sein, mit einem von einem Computer lesbaren Medium und mit einem Computerprogramm und zugehörigen Programmcode-Mitteln, wobei der Computer nach Laden des Computerprogramms zur Durchführung des oben beschriebenen, erfindungsgemäßen Verfahrens veranlaßt wird.

Eine alternative Aufgabenlösung sieht ein Speichermedium vor, das zur Speicherung des vorstehend beschriebenen, computerimplementierten Verfahrens bestimmt ist und von einem Computer lesbar ist.

Zusätzliche, vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:

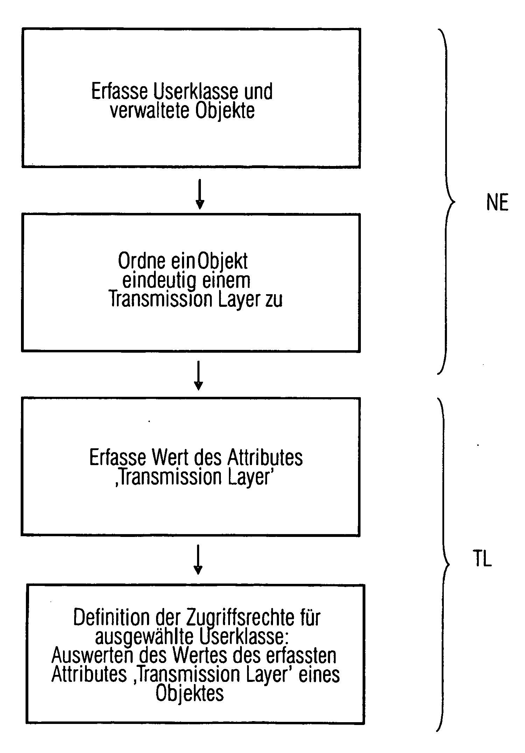

- Figur 1: ein erfindungsgemäßes Ablaufschema nach einer be- vorzugten Ausführungsform.

Abhängig von der Wahl der Abstraktionsebene unterscheidet man zwischen den unterschiedlichen Schichten eines Kommunikationsnetzwerkes. Das Transportnetz oder transmission layer network bezieht sich auf die unterste Schicht und betrifft u.a. die physikalische Trassenführung der Lichtwellenleiter, sowie die Vermittlungseinrichtungen und weitere Elemente.

Das in einem Schichtenmodell abgebildete Kommunikationsnetzwerk umfasst eine Vielzahl von Netzelementen NE und eine Vielzahl von Objekten O. Die Objekte O repräsentieren alle logischen und/oder physikalischen Ressourcen des Netzwerkes und umfassen beispielsweise Ports bzw. PTPs, TCPs (Termination Connection Points), TTPs (Trail Termination Points), DXC (Digital Cross Connects), Point-to-Multipointelemente und Protection Groups etc.

Je nach Modellierung können alle Objekte O oder nur eine Auswahl von Objekten O in einem oder mehreren Netzelementen NE verwaltet werden.

Jedes Objekt O hat sein namensgebendes Attribut, das zu dessen Identifizierung dient. Für alle Objekte O, die eindeutig einer Übertragungsschicht bzw. einer Transmission Layer TL zugeordnet werden können, können die Zugriffsrechte auf diese Objekte O gemäß der Erfindung automatisch zugeordnet werden. Für die restlichen Objekte O, die keiner Transmission Layer oder nicht eindeutig zugeordnet werden können, wie z.B. Karten oder anderes Equipment, kann voreingestellt sein, dass diese Objekte O für alle User einheitlich behandelt werden und insbesondere für alle User sichtbar sind, so dass jeder User Zugriff auf diese Objekte O hat.

Ist der User beispielsweise im Hinblick auf bestimmte Übertragungsschichten eingeschränkt, so kann der User auch nur auf die Objekte O dieser (berechtigten) Übertragungsschichten zugreifen.

Für den Datenverkehr können verbindungsorientierte Transportprotokolle und Transportnetze, wie ATM (Asynchronous Transfer Mode) oder SDH (Synchronous Digital Hierarchy) verwendet werden. SDH ist ein reines Transportnetz und transportiert die zu übertragenden Daten in sogenannten virtuellen Containern (z.B. VC3, VC4, VC12).

Die einzelnen Netzebenen bzw. Layers oder Hierarchien können meist über einheitliche Schnittstellen miteinander kommunizieren. Bei erhöhten Anforderungen an das Transportnetzwerk, z.B. bei gemischtem Daten- und Sprachverkehr, gewinnt das Management der zugrundeliegenden Ressourcen und damit auch die Vergabe und Verwaltung der Zugriffsrechte auf diese Ressourcen immer mehr an Bedeutung. Die Erfindung bietet hier - auch im Hinblick auf die zukünftige Einbindung von neuen, weiteren Technologien in die Netzelemente NE - eine sinnvolle Lösung an, die unabhängig von der Art der einzelnen Netzelemente NE ist.

Ist es für die Konfiguration des Netzwerkes notwendig, dass neue Objekte O und/oder neue Netzelemente NE in das Transportnetz eingebunden werden (z.B. neue PTPs, CTPs, TTPs, CCs, PMPs etc), dann erfolgt die Vergabe für die Zugriffsrechte auf diese Elemente für eine ausgewählte Gruppe von Usern erfindungsgemäß automatisch über die Auswertung des Attributes Transmission Layer TL für das jeweilige Objekt O.

Im Folgenden wird unter Bezugnahme auf Figur 1 der Ablauf des erfindungsgemäßen Verfahrens gemäß einer bevorzugten Ausführungsform der Erfindung beschrieben.

In einem ersten Schritt wird die Gruppe von Usern erfasst, für die die Zugriffsrechte vergeben werden sollen. Hier ist es möglich, die Vergabe nur für einzelne User auszuführen - dann besteht die Userklasse nur aus diesem einen User -, oder für alle oder eine Auswahl von Usern.

Dann müssen die Objekte O in einem weiteren Schritt identifiziert werden, die eindeutig einer Transmission Layer TL zugeordnet werden können und somit Grundlage für die Zuweisung der Zugriffsrechte sein können.

Vorzugsweise finden die beiden ersten Schritte auf der Hierarchieebene der Netzelemente NE statt. Dies ist mit dem Bezugszeichen ,NE' hinter der geschweiften Klammer in Figur 1 gekennzeichnet. Die sich anschließenden Schritte werden erfindungsgemäß auf einer darüber liegenden Hierarchieebene ausgeführt, nämlich auf der Ebene der Transmission Layer TL. Dies ist mit dem Bezugszeichen ,TL' hinter den beiden unteren Ablaufelementen in Figur 1 vermerkt.

Nachdem der Wert des Attributes 'Transmission Layer' TL oder ein der jeweiligen Transmission Layer eineindeutig zugeordneter Name erfasst worden ist kann das Zugriffsrecht definiert werden.

Dies erfolgt, indem der erfasste Wert des Attributes 'Transmission Layer' TL für das jeweilige Objekt O ausgewertet wird. Der erfasste Wert kann über eine Look-up Table oder über einen Datenbankzugriff auf die entsprechenden Zugriffsrechte verweisen, die dann automatisch zugewiesen werden.

Das Attribut kann in anderen Modellen einen abweichenden Namen haben, definiert aber stets die Übertragungsschicht, die rein logischer oder physikalischer Natur sein kann. Die das Objekt O referenzierende Information des Attributes wird erfindungsgemäß für die Definition des Zugriffsrechts verwendet.

Ein sehr großes Netz mit beispielsweise über 500 000 2Mbit/s-Verbindungen erfordert eine hohe Anzahl von Netzelementen NE mit unterschiedlicher Funktionalität und Technologie (z.B. ISDN, GSM, ATM, SDH etc). Die Anzahl der Transmission Layers kann ca. 100 betragen. Die Verwaltung der einzelnen Objekte O (deren Anzahl bei einem relativ großen Netz in den Bereich von Millionen geht), die Definition der Zugriffsrechte auf die Objekte O und die Verwaltung der Zugriffsrechte können erfindungsgemäß enorm vereinfacht werden, indem nicht mehr jedes einzelne Objekt auf der Ebene der Netzelemente NE angesprochen werden muss, sondern indem die Objekte über das Attribut in der hierarchisch darüber liegenden Transmission Layer referenziert werden.

In Figur 1 sind die wesentlichen Schritte nach einer bevorzugten Ausführungsform der Erfindung gezeigt, die allerdings nicht notwendigerweise in dieser Reihenfolge ausgeführt sein müssen.

Die erfindungsgemäße Vorrichtung und das erfindungsgemäße System greifen auf ein Zugriffsmodul zu, das zur Ausführung des oben beschriebenen referenzierenden Verfahrens bestimmt ist und insbesondere die Objekte nicht mehr unmittelbar bzw. direkt sondern nur noch mittelbar bzw. indirekt über den Wert des Attributes anspricht.

## Patentansprüche

1. Verfahren zur Definition von Zugriffsrechten für eine Userklasse auf zumindest ein Objekt , das zumindest einem Netzelement (NE)in einem Netzwerk zugeordnet ist, wobei das Netzelement (NE) verschiedene Technologien unterstützen kann und die Definition der Zugriffsrechte auf die Objekte auf einer über einer Hierarchieebene der Netzelemente (NE) befindlichen Hierarchieebene des Netzwerkes namentlich dem Transmission Layer" (TL) erfolgt,
wobei
die Zugriffsrechte definiert werden, indem ein Wert eines Attributs der über der Hierarchieebene der Netzelemente (NE) befindlichen Hierarchieebene für Objekte eines Übertragungsnetzes ausgewertet wird.

2. Verfahren nach Anspruch 1 , **dadurch gekennzeichnet, dass** die Definition der Zugriffsrechte wahlweise in Abhängigkeit von Technologiegruppen erfolgt, denen die einzelnen Objekte zugeordnet sein können.

3. Verfahren nach zumindest einem der vorstehenden Ansprüche, **dadurch gekennzeichnet, dass** die Definition der Zugriffsrechte eine Vergabe, Steuerung bzw. Überwachung und/oder Verwaltung der Zugriffsrechte umfasst.

4. Verfahren nach zumindest einem der vorstehenden Ansprüche, **dadurch gekennzeichnet, dass** die Zugriffsrechte automatisch und/oder dynamisch definiert werden.

5. Verfahren nach zumindest einem der vorstehenden Ansprüche, **dadurch gekennzeichnet, dass** das Verfahren einen weiteren Schritt umfasst, der der Definition der Zugriffsrechte zeitlich vorangestellt ist:
- Zuordnen zumindest einer Auswahl von Objekten des Netzwerkes zu einer hierarchisch höher liegenden Transmission Layer (TL).

6. Verfahren nach zumindest einem der vorstehenden Ansprüche, **dadurch gekennzeichnet, dass** die Userklasse eine Gruppe von Usern betrifft, die nach vorkonfigurierbaren Parametern definiert werden kann.

7. Verfahren nach zumindest einem der vorstehenden Ansprüche, **dadurch gekennzeichnet, dass** die Netzelemente (NE) von unterschiedlichen End-to-End-Applikationen bedient werden können.

8. System zur Definition von Zugriffsrechten für eine Userklasse auf zumindest ein Objekt, das zumindest einem Netzelement (NE) in einem Netzwerk zugeordnet ist, wobei das Netzelement (NE) verschiedene Technologien unterstützen kann und wobei das System ein Zugriffsmodul umfasst, das zur Ausführung eines Verfahrens nach zumindest einem der vorstehenden Ansprüche 1 bis 7 bestimmt ist.

## Claims

1. Method for defining access rights for a user class to at least one object which is allocated to at least one network element (NE) in a network, the network element (NE) being able to support different technologies and the access rights being defined to the objects on a hierarchical level of the network above a hierarchical level of the network elements (NE), and namely the "transmission layer" (TL), wherein the access rights are defined by evaluating a value of an attribute of the hierarchical level above the hierarchical level of the network elements (NE) for objects of a transmission network.

2. Method according to Claim 1, **characterized in that** the access rights are optionally defined in dependence on technology groups to which the individual objects can be allocated.

3. Method according to at least one of the preceding claims, **characterized in that** defining the access rights comprises an issuing, controlling or monitoring and/or managing the access rights.

4. Method according to at least one of the preceding claims, **characterized in that** the access rights are automatically and/or dynamically defined.

5. Method according to at least one of the preceding claims, **characterized in that** the method comprises a further step which precedes the defining of the access rights in time:
- allocating at least a selection of objects of the network to a hierarchically higher transmission layer (TL).

6. Method according to at least one of the preceding claims, **characterized in that** the user class relates to a group of users which can be defined in accordance with preconfigurable parameters.

7. Method according to at least one of the preceding claims, **characterized in that** the network elements (NE) can be operated by different end-to-end applications.

8. System for defining access rights for a user class to at least one object which is allocated to at least one network element (NE) in a network, the network element (NE) being able to support different technologies and the system comprising an access module which is intended for carrying out a method according to at least one of the preceding Claims 1 to 7.

## Revendications

1. Procédé pour définir des droits d'accès pour une classe d'utilisateur sur au moins un objet qui est associé à au moins un élément de réseau (NE) dans un réseau, l'élément de réseau (NE) pouvant supporter différentes technologies et la définition des droits d'accès aux objets s'effectuant à un niveau hiérarchique du réseau, à savoir la couche de transmission « Transmission Layer » (TL), qui se trouve au-dessus d'un niveau hiérarchique des éléments de réseau (NE), les droits d'accès étant définis par évaluation d'une valeur d'un attribut du niveau hiérarchique situé au-dessus du niveau hiérarchique des éléments de réseau (NE) pour des objets d'un réseau de transmission.

2. Procédé selon la revendication 1, **caractérisé en ce que** la définition des droits d'accès s'effectue, au choix, en fonction de groupes technologiques auxquels les différents objets peuvent être associés.

3. Procédé selon au moins l'une des revendications précédentes, **caractérisé en ce que** la définition des droits d'accès inclut une attribution, une commande resp. une surveillance et/ou une gestion des droits d'accès.

4. Procédé selon au moins l'une des revendications précédentes, **caractérisé en ce que** les droits d'accès sont définis automatiquement et/ou dynamiquement.

5. Procédé selon au moins l'une des revendications précédentes, **caractérisé en ce que** le procédé comprend une autre étape qui précède la définition des droits d'accès dans le temps :
- affectation d'au moins un choix d'objets du réseau à une couche de transmission « Transmission Layer » (TL) hiérarchiquement supérieure.

6. Procédé selon au moins l'une des revendications précédentes, **caractérisé en ce que** la classe d'utilisateurs concerne un groupe d'utilisateurs qui peut être défini selon des paramètres préconfigurables.

7. Procédé selon au moins l'une des revendications précédentes, **caractérisé en ce que** les éléments de réseau (NE) peuvent être servis par différentes applications de bout en bout.

8. Système de définition de droits d'accès, pour une classe d'utilisateurs, à au moins un objet qui est associé à au moins un élément de réseau (NE) dans un réseau, l'élément de réseau (NE) pouvant supporter différentes technologies et le système comprenant un module d'accès qui est destiné à exécuter un procédé selon au moins l'une des revendications précédentes 1 à 7.
